**Europäisches Patentamt**

**European Patent Office**

**Office européen des brevets**

(11) Veröffentlichungsnummer : **0 196 410 B1**

# EUROPÄISCHE PATENTSCHRIFT

(45) Veröffentlichungstag der Patentschrift :
20.01.88

(51) Int. Cl.⁴ : **B 65 B   3/28**

(21) Anmeldenummer : **86100713.6**

(22) Anmeldetag : **12.10.84**

(60) Veröffentlichungsnummer der früheren Anmeldung
nach Art. 76 EPÜ : **0138212**

(54) **Vorrichtung zum gleichzeitigen Abfüllen eines flüssigen oder festen, fliessfähigen Mediums in mehrere Gebinde, wie Behälter, Fässer, Packungen od. dgl.**

(30) Priorität : **14.10.83 DE 3337352**

(43) Veröffentlichungstag der Anmeldung :
**08.10.86 Patentblatt 86/41**

(45) Bekanntmachung des Hinweises auf die Patenterteilung : **20.01.88 Patentblatt 88/03**

(84) Benannte Vertragsstaaten :
**BE CH DE FR GB IT LI NL SE**

(56) Entgegenhaltungen :
**EP-A- 0 105 197
DE-A- 2 728 759
DE-A- 3 022 413
US-A- 3 548 891**

(73) Patentinhaber : **Grosskreuz, Gerhard
Volksdorfer Weg 174
D-2000 Hamburg 65 (DE)**

**Kleinophorst geb. Schädel, Edith
Kronprinzenstrasse 9
D-4130 Moers 1 (DE)**

(72) Erfinder : **Grosskreuz, Gerhard
Volksdorfer Weg 174
D-2000 Hamburg 65 (DE)**
Erfinder : **Kleinophorst geb. Schädel, Edith
Kronprinzenstrasse 9
D-4130 Moers 1 (DE)**

(74) Vertreter : **Richter, Joachim, Dipl.-Ing.
Patentanwälte Richter u. Werdermann Neuer Wall 10
D-2000 Hamburg 36 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum gleichzeitigen Abfüllen eines flüssigen oder festen, fließfähigen Mediums in mehrere Gebinde, wie Behälter, Fässer, Packungen od. dgl., nach dem Oberbegriff des Patentanspruchs 1.

Durch die nachveröffentlichte, unter Artikel 54 (3) fallende EP-A-0 105 197 ist eine derartige Vorrichtung zum gleichzeitigen Abfüllen eines flüssigen oder festen, fließfähigen Mediums in mehrere Gebinde, wie Behälter, Fässer, Packungen od. dgl., bestehend aus einem Rohrleitungssystem mit einer Förderpumpe für die Zuführung des abzufüllenden Mediums und mit über Zuführungsleitungen verbundenen Abfüllventilen oberhalb der zu füllenden Gebinde bekannt, bei der in jeder zu den Abfüllventilen führenden Zuführungsleitung eine Volumenkammer mit einem in deren Innenraum angeordneten, von dem zum jeweiligen Abfüllventil strömenden Medium in Drehung versetzten Laufrad angeordnet ist, wobei die Laufräder aller Volumenkammern über eine mechanische Welle starr miteinander verbunden sind, die mit einer mittels einer systemdruckabhängigen Steuereinrichtung steuerbaren Bremseinrichtung verbunden ist, wobei zur Steuerung der Abfüllventile ein zweistufiger, pneumatischer Schaltzylinder vorgesehen ist, der mit mindestens einem Abfüllventil direkt und mit den weiteren Abfüllventilen über eine Stelleinrichtung verbunden ist, und wobei ein auf das Gewicht des abgefüllten Mediums über eine Waage, die einem der Abfüllventile zugeordnet ist, ansprechendes Steuerelement vorgesehen ist, das mit dem Schaltzylinder verbunden ist.

Mit einer derart ausgebildeten Abfüllvorrichtung ist ein eichfähiges Abfüllsystem geschaffen, mit dem mehrere Gebinde gleichzeitig befüllt werden können, wobei nur das Abfüllvolumen oder -gewicht eines Gebindes gemessen und überwacht zu werden braucht, so daß dadurch ein einfaches, wirtschaftliches Abfüllsystem erhalten werden soll, dessen Arbeitsleistung in einfachster Weise zu jeder Zeit ohne großen technischen Aufwand erhöht werden kann. Ein Abbau von in den Zuführungsleitungen auftretenden Druckstößen zur Vermeidung von unrichtigen Meßergebnissen ist bei dieser Vorrichtung jedoch nicht möglich.

Nach der US-A-3 548 891 ist eine Anlage zum gleichzeitigen Abfüllen mehrerer Gebinde, jedoch unter Verwendung von Dosier- und Fülleinrichtungen in einer der Anzahl der zu füllenden Behälter entsprechenden Anzahl bekannt, wobei jedem zu füllenden Behälter eine eigene Abfülleinrichtung zugeordnet ist. Die bei dieser Anlage verwendeten Abfüllstutzen ermöglichen das Füllen einzelner Behälter nach dem Abfüllvolumen, was dadurch möglich ist, daß jedem einzelnen Behälter eine Abfülleinrichtung zugeordnet ist. Jedoch wird bei dieser Abfülleinrichtung weder das Abfüllvolumen noch das Abfüllgewicht eines einzigen Behälters gemessen und überwacht, so daß die Füllung der Behälter nicht über das Abfüllvolumen oder das Abfüllgewicht eines einzigen Behälters gesteuert wird. Vielmehr wird das Abfüllvolumen oder das Abfüllgewicht für jeden einzelnen Behälter überwacht und zur Steuerung der Abfülleinrichtung herangezogen.

Die CH-A-147 328 beschreibt eine Abfüllvorrichtung, bei der ein gewichtsabhängiges Steuerorgan vorgesehen ist, welches in der Weise arbeitet, daß die weitere Zufuhr des abzufüllenden Mediums unterbrochen wird, wenn das jeweils vorgegebene Gewicht erreicht wird. Hierzu ist der zu befüllende Behälter auf einer Tragplatte angeordnet, die sich endseitig vermittels schneidartiger Lager auf den freien Enden zweier Hebel abstützt, deren einander zugekehrte freie Hebelenden einen Schalter betätigen, über den das Öffnen und Schließen des Abfüllventils gesteuert wird, wobei diese Steuerung mittels eines Elektromagneten erfolgt, so daß bei Erreichen eines vorgegebenen Sollgewichtes die weitere Zufuhr an Abfüllmedium unterbrochen wird. Eine Vielzahl von Abfüllventilen nur über eine einzige gewichtsgesteuerte Vorrichtung zu steuern, ist bei dieser Abfüllvorrichtung nicht vorgesehen.

Durch die US-A-3 205 920 ist eine Abfüllvorrichtung bekannt, mit der an mehreren Abfüllventilen vorbeigeführte Behälter mit Flüssigkeiten befüllbar sind. Die Zuführung der zu befüllenden Behälter erfolgt über ein Transportband, dessen Vorlaufbewegung abgeschaltet wird, wenn die der Anzahl der Abfüllventile entsprechende Anzahl von Behältern unter den Ausgabeöffnungen der Abfüllventile zu liegen kommen. In diesem Augenblick werden über eine Kulissensteuerung alle Abfüllventile gleichzeitig auf die Öffnungen der zu befüllenden Behälter abgesetzt, wobei dann gleichzeitig über Pumpen den Abfüllventilen diejenige Menge an Flüssigkeit zugeführt wird, die in die Behälter abgefüllt werden soll. Um das gleichmäßige Absetzen der Abfüllventile auf die Behälteröffnungen zu gewährleisten, sind alle Abfüllventile an einem Tragbalken befestigt, der in senkrechten Führungen verschieblich gehalten ist. Über den Kulissenantrieb ist dieser Tragbalken mit den Abfüllventilen auf und ab bewegbar. Die Verbindung der Abfüllventile mit den Pumpen erfolgt über flexible Schlauchleitungen. Auch bei dieser Abfüllvorrichtung werden alle Behälter gleichzeitig unter Verwendung von Abfüllventilen mit Flüssigkeit gefüllt, über die gleichzeitig die Dosierung vorgenommen wird.

Durch die DE-A-27 28 759 ist eine Maschinenanlage zum Vereinzeln und zum Füllen und Verschließen von becherförmigen Behältern aus Papier, Pappe oder Kunststoff bekannt, die aus einer mit mehreren nebeneinander angeordneten Aufnahmetaschen versehenen, endlosen Fördereinrichtung, über der nacheinander Stapelstationen für Behälter, Deckblätter und Deckel mit Vorrichtungen zum Vereinzeln und Zuführen derselben vorgesehen sind, ferner aus einer Dosierstation mit Dosierorganen zum gleichzeitigen Befüllen mehrerer Behälter, einer Deckelstation und ggfs. einer Deckelblattstation sowie einer Andrückstation mit Bodendruckwerk besteht. Dabei ist die Maschinenanlage in Längsrichtung von einer mit einem Antriebsmotor verbundenen Hauptantriebswelle durchsetzt, von der aus in den einzelnen Station entsprechenden Abständen Nebenantriebswellen senkrecht abgezweigt sind, die mit der Hauptantriebswelle in einem bodennahen Maschinengehäuse untergebracht sind, das seinerseits senkrecht zur Hauptantriebswelle Führungsschienen aufweist zum Einschieben eines kompletten Stationswerkzeuges, das mit Anschlußverbindungen für die jeder Station zugeordneten und benachbarten Versorgungsleitungen versehen ist. Diese Maschinenanlage, der becherförmige Behälter zum Füllen und Verschließen zugeführt werden, ist hiernach so ausgebildet, daß komplette Werkzeuge untereinander ausgetauscht oder durch andere Werkzeuge ersetzt werden können, wozu weder ein großer körperlicher Einsatz noch Fachkräfte noch ein besonderer Zeitaufwand erforderlich sein sollen. Des weiteren ist bei dieser Maschinenanlage jedem Stationswerkzeug ein zwischen zwei benachbarten Stationswerkzeugen fest installierter, mit Versorgungsleitungen versehener Leitungskasten zugeordnet. Die auf diese Weise in die Maschinenanlage ein- und ausbaubaren Werkzeuge, die komplett mit Antrieb und Versorgungsleitung in kürzester Zeit auch von ungelernten Kräften außer Betrieb gesetzt und wieder zum Einsatz gebracht werden können, sollen Vorteile mit sich bringen, und zwar insofern, als ein kleiner Betrieb mit einer Grundmaschine und zwei Werkzeugen die Produktion von Verkaufsverpackungen beginnen und sie durch nachträglichen Zukauf weiterer Werkzeuge immer mehr ausgestalten kann. Außerdem soll ein bestimmtes Werkzeug, z. B. für die Deckblatt- oder Siegelstation, bei mehreren Grundmaschinen immer dort, wo es gebraucht wird, eingesetzt werden können. Wesentlich ist jedoch bei dieser Maschinenanlage, daß die Steuerung der Menge oder des Gewichts des abzufüllenden Mediums nicht über das gewichtsmäßige Erfassen eines Behälters während dessen Füllvorganges erfolgt, sondern gleichzeitig werden über entsprechend vorgesehene Dosiereinrichtungen mehrere Behälter gefüllt.

Die DE-A-30 22 413 betrifft eine Vorrichtung zum Abfüllen von Flüssigkeiten mit Hilfe einer Waage, wobei diese Vorrichtung als Füllventil für Wägefüller ausgebildet ist, das zwei Öffnungsstufen aufweist, wobei diese zwei Öffnungsstufen aus zwei übereinander angeordneten, nacheinander betätigbaren Ventilen bestehen, wobei ein Ventil aus dem Ventilgehäuse und einem in dem Ventilgehäuse auf und ab bewegbaren Ventilkörper und das andere Ventil aus einem innerhalb des Ventilgehäuses befestigten Körper und einem mit einer Stange in Verbindung stehenden Ventilkörper gebildet ist. Mit einem derart ausgebildeten Füllventil soll sich der Vorteil einer sicheren und einfachen Arbeitsweise bei kurzen Füllzeiten und hoher Füllgenauigkeit ergeben. Das Ventilgehäuse dieses Füllventils weist im unteren Bereich eine Grobfülldüse auf, in der ein Feinfüllrohr angeordnet ist. Die Ventilsitze für die Grobfülldüse und das Feinfüllrohr sind einander derart zugeordnet, daß beim Einleiten eines Füllvorganges vermittels eines Zugmagneten die beiden Ventilsitze der Grobfülldüse und des Feinfüllrohres geöffnet und ein Stoßmagnet eingeschaltet werden, so daß der gesamte Austrittsquerschnitt, d. h. die Öffnungen der Grobfülldüse und des Feinfüllrohres, freigegeben wird. Nach Erreichen einer voreingestellten Zwischenmenge, die über die Zeit oder in einer anderen geeigneten Weise vorwählbar ist, wird der Zugmagnet abgeschaltet und dadurch der Ventilsitz der Grobfülldüse geschlossen, so daß kein weiterer Zulauf des abzufüllenden Mediums in den Behälter über die Grobfülldüse möglich ist. Der Ventilsitz für das Feinfüllrohr bleibt so lange geöffnet, bis das Sollgewicht erreicht wird. Ist dieses erreicht, so wird der Stoßmagnet abgeschaltet und der Ventilsitz für das Feinfüllrohr verschlossen, so daß die Feinfüllung ebenfalls unterbrochen wird. Die Steuerung der gesamten Wägefülleinrichtung erfolgt automatisch und unter Verwendung einer Waage und einer Steuereinheit, über die das Füllventil gesteuert wird. Bei dieser Abfüllvorrichtung erfolgt beim Füllen eines jeden Behälters ein gewichtsmäßiges Erfassen des in den Behälter über das Abfüllventil zugeführte Füllgut, wobei über dieses gewichtsmäßige Erfassen vermittels der Steuereinheit die Grobfüllung und die Feinfüllung gesteuert werden. Ein gleichzeitiges Befüllen mehrerer Behälter, wobei das Füllgut nur eines einzigen Behälters gewichtsmäßig erfaßt und zu Steuerungszwecken der Abfüllventile aller anderen Abfüllstationen verwendet wird, ist bei dieser bekannten Vorrichtung nicht vorgesehen.

Durch die US-A-3 580 304 ist eine Anlage zum gleichzeitigen Abfüllen von Wasser in mehrere Gläser über eine Wasserverteilungs-Sammelleitung mit einer der Anzahl der zu füllenden Gläser entsprechenden Anzahl von Flüssigkeitsaustrittsdüsen bekannt, wobei jeweils eine Austrittsdüse einem zu befüllenden Gefäß zugeordnet ist. Die Zuführung des Wassers zur Wasserverteilungs-Sammelleitung erfolgt mittels eines einzigen Ventils, das in der Hauptzuführungsleitung angeordnet ist und das über eine Einrichtung gesteuert wird. Diese Steuereinrichtung besteht aus einer als einarmiger Hebel ausgebildeten Plattform, die einendseitig um einen Schwenkpunkt verschwenkbar angeordnet ist und eine Tragplatte aufnimmt, auf der die zu füllenden Gläser angeordnet sind. Das freie Ende dieser Tragplatte ist mittels einer Feder beaufschlagt, und zwar derart, daß bei auf dieser Tragplatte aufgesetzten Gläsern vor und während des Füllvorganges das Zuflußventil eine geöffnete Stellung einnimmt und erst dann geschlossen wird, wenn alle Behälter auf der Tragplatte gefüllt sind und die Tragplatte aufgrund des dadurch entstehenden höheren Gewichtes gegen den Druck der die Tragplatte beaufschlagenden Feder bewegt wird, mit der Folge, daß über eine Steuerstange das Wasserzuflußventil geschlossen wird. Bei dieser Abfüllvorrichtung wird jedoch nicht das Abfüllvolumen oder -gewicht eines einzigen Gebindes gemessen und überwacht und zu Steuerungszwecken für die Durchführung des Füllvorganges für die anderen Gebinde verwendet. Hier wird vielmehr das Abfüllgewicht aller Gebinde zur Steuerung des Zuflußventils herangezogen. Jedem der zu befüllenden Behälter ist kein eigenes steuerbares Abfüllventil zugeordnet, sondern über ein einziges Ventil wird der Wasserzufluß zur gesamten Wasserverteilungs-Sammelleitung gesteuert. Die Verwendung eines einzigen Steuerventils erbringt den Nachteil, daß bei einem Schließen des Ventils nicht gleichzeitig alle Zulaufdüsen zu den zu füllenden Behältern der Wasserverteilungs-Sammelleitung geschlossen werden und es somit zu einem Nachfließen der sich noch in der Wasserverteilungs-Sammelleitung befindenden Flüssigkeit kommt, was letztlich zu unterschiedlichen Füllmengen und Füllgewichten führen kann. Außerdem ist kein gleichmäßiger Druck der zugeführten Flüssigkeit in der Wasserverteilungs-Sammelleitung gegeben, da eine Druckabnahme eintritt, je länger und je größer diese Wasserverteilungs-Sammelleitung ist und je mehr Austrittsdüsen für die zu befüllenden Behälter vorgesehen sind. Außerdem ist die Abfüllvorrichtung in keiner Weise erweiterbar ; auch eine Verringerung der Anzahl der zu befüllenden Behälter ist nicht möglich. Eine Erweiterung ist schon aus dem Grunde nicht möglich, weil der Gefäßträger für die zu füllenden Behälter vorgegebene Abmessungen aufweist und so ausgelegt ist, daß eine vorgegebene Anzahl von zu befüllenden Behältnissen aufgenommen werden kann. Eine einwandfreie Funktion der Abfüllvorrichtung ist dann nicht gewährleistet, wenn gegenüber der auf dem Gefäßträger vorgesehenen Anzahl von Behältern eine kleinere Anzahl auf dem Gefäßträger angeordnet wird. Eine Steuerung des Wasserzulaufventils ist in diesem Fall nicht möglich, da das Gewicht der gefüllten Behälter nicht ausreicht, um den Gefäßträger gegen den Druck der Feder zu verschwenken, um das Zulaufventil zu verschließen.

Alle bekannten Abfüllvorrichtungen sind nicht so ausgelegt, daß bei Bedienung mehrerer und auch unterschiedlicher Verbraucher Druckstöße vermeidbar sind, so daß bei einer plötzlichen Unterbrechung der Zufuhr des abzufüllenden Mediums ein Druckabbau in den Zuführungsleitungen zu den Füllstationen oder Verbrauchern eintritt, so daß in den Fällen, in denen Wägungen durchgeführt werden, falsche Meßergebnisse erhalten werden können, aufgrund der dann die von den Steuereinrichtungen an die Abfüllventile weitergegebenen Steuerbefehle zu Endgewichten für das abzufüllende Medium führen, die von den Soll-Werten wesentlich abweichen.

Die Erfindung löst die Aufgabe, ein eichfähiges Abfüllsystem zu schaffen, mit dem mehrere Gebinde gleichzeitig gefüllt werden können, wobei nur das Abfüllvolumen oder -gewicht eines Gebindes gemessen und überwacht sowie zur Steuerung des Zulaufs von weiterem Medium herangezogen zu werden braucht, um über vergleichende Messungen von Durchflußmengen die Abfüllvolumen oder -gewichte für die anderen Gebinde zu steuern, so daß dadurch ein einfaches, wirtschaftliches Abfüllsystem mit einer hohen Arbeitsleistung ohne großen technischen Aufwand erhalten wird, bei dem lediglich die Durchflußmengen zu den einzelnen Gebinden mit einem gespeicherten Soll-Wert verglichen und hierüber die Steuerung der weiteren Zuflußmenge an Medium vorgenommen wird und das in mehreren Räumen unterbringbar ist, wenn in dem einzigen zur Verfügung stehenden Raum nicht die gesamte Vorrichtung mit mehreren Abfüllstationen aufgestellt werden kann und bei dem durch Zuschalten oder Abschalten einer mit dem Abfüllsystem verbundenen und zu einem weiteren Verbraucher, wie Tankwagen od. dgl., führenden Abzapfleitung in den Zuführungsleitungen auftretende Druckstöße zur Vermeidung von unrichtigen Meßergebnissen abgebaut werden.

Zur Lösung dieser Aufgabe wird eine gattungsgemäße Abfüllvorrichtung vorgeschlagen, die erfindungsgemäß in der Weise ausgebildet ist, daß die Hauptzuführungsleitung des Rohrleitungssystems mit einer weiteren, zu einem Verbraucher führenden Abzapfleitung versehen ist und daß in der zu dem Abfüllventil mit zugeordneter Waage führenden Zuführungsleitung vor dem Abfüllventil eine Förderpumpe angeordnet ist.

Mit einer derartigen Ausgestaltung ist eine eichfähige Abfüllvorrichtung geschaffen, mit der mehrere Gebinde gleichzeitig gefüllt werden können, wobei nur das Abfüllvolumen oder -gewicht eines einzigen Gebindes gemessen, überwacht und die Durchflußmenge zu der von der Waage gesteuerten Abfüllstation eines einzigen Gebindes gespeichert wird, wobei dann der so ermittelte Soll-Wert mit den registrierten und gespeicherten Durchflußmengenwerten der übrigen Abfüllstationen mit den weiteren Gebinden verglichen wird. Über diese vergleichenden Messungen erfolgt dann die Steuerung des weiteren Zulaufs bzw. die Abschaltung des Zulaufs an Medium zu den weiteren Abfüllstationen mit den Gebinden. Es ist dabei gewährleistet, daß die übrigen, nicht durch eine Waage überwachten Gebinde ebenfalls im Rahmen geringster Toleranzen mit dem gewünschten Gewicht oder Volumen des Mediums gefüllt werden. Dies wird dadurch erreicht, daß mittels einer einzigen Waage über ein Steuerelement nur ein einziges der Abfüllventile geschlossen wird. Die durch die Volumenkammer zu diesem geschlossenen Abfüllventil geflossene Menge an Medium wird bis zum Schließen des Abfüllventils in der zugeordneten Durchflußmengenregistriereinrichtung festgehalten und der so erhaltene Durchflußmengenwert als Soll-Wert in den Speicher eingegeben. Gleichzeitig werden die von den Durchflußmengenregistriereinrichtungen der anderen Volumenkammern festgehaltenen Durchflußmengenwerte an den Speicher gegeben. In dem Speicher werden dann die Ist-Werte der von den Durchflußmengenregistriereinrichtungen erfaßten Werte mit dem gespeicherten Durchflußmengenwert (Soll-Wert) derjenigen Durchflußmengenregistriereinrichtung verglichen, deren zugeordnetes Abfüllventil von der Waage gesteuert wird. Bei Übereinstimmung der Ist-Werte der anderen Durchflußmengenregistriereinrichtungen mit dem Soll-Wert erfolgt ein Schließen der übrigen Abfüllventile, so daß in allen Behältern die gleiche Menge an Medium enthalten ist. Da in dem Speicher der Meßwertvergleich in kürzester Zeiteinheit erfolgt und dadurch keine Verzögerung gegeben ist, wird erreicht, daß bei einem Schließen der Abfüllventile letztlich in allen Gebinden die gleiche Menge an Medium enthalten ist. Diese vergleichende Messung in dem Speicher führt dazu, daß bei denjenigen Abfüllstationen, bei denen das vorgegebene Soll-Gewicht in dem zu füllenden Gebinde nicht erreicht ist, Füllgut noch so weit zuströmt, bis das vorgegebene Soll-Gewicht erreicht ist, erst dann wird das zugeordnete Absperrventil geschlossen. Mit einer derart ausgebildeten Abfüllvorrichtung werden folgende Vorteile erreicht:

- Nur ein einziges Gebinde wird gewogen oder volumetrisch überwacht, wobei die Durchflußmenge durch die zugeordnete Volumenkammer als Soll-Wert gespeichert wird.

- Die Fülltoleranz aller weiteren Abfüllventile hängt lediglich von der Schnelligkeit der vergleichenden Messungen der Durchflußmengenwerte in dem Speicher für die übrigen Abfüllstationen ab, wobei bei Nichterreichen des Soll-Wertes noch die Fehlmenge an Füllgut zuströmt, bis der Soll-Wert erreicht ist und erst dann schließen die Abfüllventile der entsprechenden Abfüllsysteme. Die Genauigkeit aufgrund der vergleichenden Messungen der Durchflußmengenwerte und der Steuerung über diese vergleichenden Messungen ist sehr groß.

- Dadurch, daß die Abfüllventile aller mit der Waage nicht verbundenen Abfüllstationen getrennt vom Speicher gesteuert werden, wird erreicht, daß keine das Endgewicht beeinflussenden Fülltoleranzen erhalten werden; es ist damit erreichbar, daß alle Gebinde gleiche Füllmengen oder gleiche Füllgewichte aufweisen.

- Dadurch, daß die Volumenkammern nicht miteinander mechanisch gekoppelt sind, ist es möglich, einzelne oder zu einzelnen Gruppen zusammengefaßte Volumenkammern mit ihren Abfüllventilen in gesonderten Räumen unterzubringen, wenn der vorhandene Raum für die Unterbringung der gesamten Anlage nicht ausreichen sollte.

- Druckwellen und Druckschwankungen in dem Rohrleitungssystem haben keinen Einfluß auf die Fülltoleranz und werden aufgrund der vergleichenden Messungen im Speicher berücksichtigt.

Dadurch, daß in denjenigen Zuführungsleitungen, in denen die einer Waage zugeordneten Abfüllventile angeordnet sind, eine weitere Förderpumpe vorgesehen ist, werden in dem Rohrleitungssystem auftretende Druckstöße abgebaut.

Es hat sich nämlich gezeigt, daß in den Fällen, in denen die Hauptzuführungsleitung mit einer weiteren Abzapfleitung verbunden ist, über die ein weiterer Abnehmer oder Verbraucher, wie Tankwagen od. dgl., während des Abfüllens des Mediums in die Gebinde, versorgt wird, Druckstöße in den zu den Volumenkammern führenden Zuführungsleitungen auftreten, die sich insofern nachteilig auf die Meßergebnisse der Waage auswirken, als bei einer plötzlichen Unterbrechung der Zufuhr des Mediums zu dem weiteren Abnehmer es zu einem Druckaufbau in den Zuführungsleitungen mit der Folge kommt, daß plötzlich und insbesondere auch stoßweise Medium dem auf der Waage stehenden Gebinde zugeführt wird. Durch diese plötzliche, unterschiedliche Mediumzufuhr zeigt die Waage falsche Meßergebnisse an bzw. gibt falsche Meßergebnisse an die Steuereinrichtung weiter, so daß die Gebinde dann letztlich nicht die vorgegebenen Endgewichte für das abgefüllte Medium enthalten. Durch die Vorschaltung einer Förderpumpe vor dem Abfüllventil, das der Waage zugeordnet ist, wird ein gleichmäßiger Zulauf an Medium zum Abfüllventil gewährleistet, so daß die vorgegebenen Endgewichte genauestens eingehalten werden können. Erhöhte Austrittsgeschwindigkeiten werden vermieden, denn die vorgeschaltete Förderpumpe sorgt für das Einhalten gleichmäßiger Austrittsgeschwindigkeiten, auch wenn in der Zuführungsleitung von der Förderpumpe Druckschwankungen auftreten sollten.

Nach einer weiteren vorteilhaften Ausgestaltung der Erfindung ist in jeder der zu den Abfüllventilen führenden Zuführungsleitungen eine Förderpumpe angeordnet. Dadurch, daß alle Förderpumpen gleichlaufend sind, ist bei allen Abfüllventilen die gleiche Anströmgeschwindigkeit gegeben.

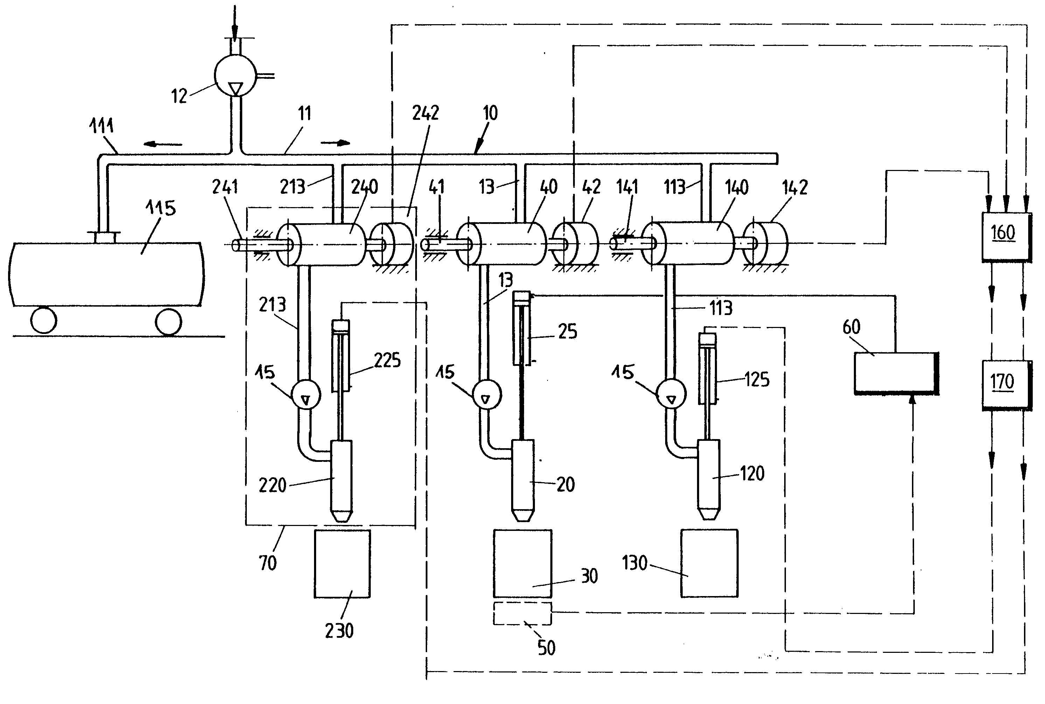

Im folgenden wird der Gegenstand der Erfindung in der Zeichnung erläutert, die in einer schematischen Darstellung eine Abfüllvorrichtung zum gleichzeitigen Abfüllen eines Mediums in mehrere Gebinde mit Volumenkammern und mit einer Steuerung der Abfüllstationen über die Durchflußmengen in den Volumenkammern in Verbindung mit einer Waage und in einen Tankwagen zeigt.

Die Abfüllvorrichtung besteht aus einem Rohrleitungssystem 10, welches eine Hauptzuführungsleitung 11 für das abzufüllende Medium, in der eine Förderpumpe 12 angeordnet ist, und eine Anzahl von weiteren, von der Hauptzuführungsleitung 11 abzweigenden Zuführungsleitungen 13, 113, 213 umfaßt, die zu einer entsprechenden Anzahl von Abfüllventilen 20, 120, 220 führen. Die Anzahl der Abfüllventile kann beliebig gewählt sein; sie richtet sich nach der jeweiligen Größe der Abfüllvorrichtung und danach, welche Anzahl, von Gebinden gleichzeitig befüllt werden soll. Bei dem in der Zeichnung dargestellten Ausführungsbeispiel einer Abfüllvorrichtung sind drei Abfüllventile 20, 120, 220 vorgesehen.

Die Hauptzuführungsleitung 11 ist mit einer Abzapfleitung 111 versehen, die zu einem weiteren Verbraucher oder Abnehmer führt, z. B. zu einem bei 115 angedeuteten Tankwagen.

Die Betätigung der in an sich bekannter Weise ausgebildeten Abfüllventile 20, 120, 220, d. h. das Öffnen, das Einstellen und das Schließen erfolgt über pneumatische, vorteilhafterweise zweistufig arbeitende Schaltzylinder 25, 125, 225, wobei jedoch auch andersartig ausgebildete Steuereinrichtungen und Antriebseinrichtungen für das Betätigen der Abfüllventile 20, 120, 220 vorgesehen sein können.

Jedem Abfüllventil 20, 120, 220 ist ein zu füllendes Gebinde 30, 130, 230 zugeordnet. Bei diesen Gebinden handelt es sich um Behälter, Fässer, Packungen od. dgl., wobei keine Begrenzungen in den Abmessungen der zu füllenden Gebinde gegeben sind. Anstelle der Gebinde können auch die Ladeflächen von Lastkraftwagen, Transportschiffen od. dgl. in gleicher Weise gleichzeitig befüllt werden.

Jedem Abfüllventil 20, 120, 220 ist eine Volumenkammer 40, 140, 240 vorgeschaltet, die in den von der Hauptzuführungsleitung 11 abzweigenden Zuführungsleitungen 13, 113, 213, die zu den Abfüllventilen 20, 120, 220 führen, angeordnet ist. Jede Volumenkammer 40, 140, 240 weist in ihrem Innenraum ein in der Zeichnung nicht dargestelltes Laufrad auf, das in der Volumenkammer mittels Lagerwellen 41 bzw. 141 bzw. 241 drehbar gelagert ist und das von dem zum Abfüllventil strömenden Medium in Umlauf versetzt wird. Die Laufräder aller Volumenkammern 40, 140, 240 sind über ihre Lagerwellen 41, 141, 241 in entsprechender Weise gelagert.

Jede Lagerwelle 41 bzw. 141 bzw. 241 eines jeden Laufrades einer jeden Volumenkammer 40 bzw. 140 bzw. 240 steht mit einer Durchflußmengenregistriereinrichtung 42 bzw. 142 bzw. 242 in Verbindung. Diese Durchflußmengenregistriereinrichtungen 42, 142, 242 erfassen die Mengen der durch die Volumenkammern 40, 140, 240 strömenden Medien, und zwar über die Umlaufgeschwindigkeit oder die Anzahl der Umlaufdrehungen der Lagerwellen 41, 141, 241 der einzelnen Laufräder. Dadurch, daß das Volumen einer jeden Volumenkammer festgelegt und alle Volumenkammern 40, 140, 240 gleiche Volumina aufweisen, ist es über die Lagerwellen 41, 141, 241 möglich, die durch die einzelnen Volumenkammern strömenden Mengen an Medien wertmäßig zu erfassen und zu registrieren.

Jedes Abfüllventil mit der ihm zugeordneten Volumenkammer ist als Baueinheit 70 ausgebildet, so daß lediglich ein Anschluß der Volumenkammer an die Hauptzuführungsleitung 11 des vorhandenen Rohrleitungssystems 10 erforderlich ist, um bereits bestehende Anlagen den erforderlichen Bedürfnissen anpassend erweitern zu können.

Einem der Abfüllventile 20, 120, 220 der Abfüllvorrichtung ist eine in an sich bekannter Weise ausgebildete Waage 50 zugeordnet. Bei der in der Zeichnung dargestellten Ausführungsform ist die Waage 50 unterhalb des Abfüllventils 20 angeordnet. Die Waage 50 steht mit einem Steuerelement 60 in Verbindung, über das wiederum der Schaltzylinder 25 steuerbar ist. Über die Waage 50 und das Steuerelement 60 erfolgt die Steuerung des Schaltzylinders 25 für das Ein- und Ausschalten des Abfüllventils 20, das dem Gebinde 30 zugeordnet ist. Es besteht jedoch auch die Möglichkeit, über die Waage 50 eines der anderen Abfüllventile 120 bzw. 220 zu steuern.

In der Zuführungsleitung 13 zu dem Abfüllventil 20, dem die Waage 50 zugeordnet ist, ist eine Förderpumpe 15 angeordnet, die das ankommende Medium mit gleichmäßiger Fördergeschwindigkeit dem Abfüllventil 20 zuführt.

Die mit den Volumenkammern 40, 140, 240 verbundenen Durchflußmengenregistriereinrichtungen 42, 142, 242 dienen zum Erfassen der Mengen der durch die Volumenkammern hindurchgeströmten Medien. Alle drei Durchflußmengenregistriereinrichtungen 42, 142, 242 stehen mit einer die von den Durchflußmengenregistriereinrichtungen erfaßten Durchflußmengenwerte speichernden Einrichtung 160 in Verbindung. Die Gesamtanordnung ist dabei so getroffen, daß der von der Durchflußmengenregistriereinrichtung 42 erfaßte Durchflußmengenwert als Soll-Wert in den Speicher 160 eingegeben wird. Die von den Durchflußmengenregistriereinrichtungen 142, 242 erfaßten Durchflußmengenwerte werden ebenfalls in den Speicher 160 als Ist-Werte gegeben und dort mit dem gespeicherten Durchflußmengenwert (Soll-Wert) der Durchflußmengenregistriereinrichtung 42 verglichen. Dieser Speicher 160 kann gleichzeitig Steuerfunktionen übernehmen, wenn nicht ein gesondertes Steuerelement 170 vorgesehen ist. Die Steuerfunktion besteht darin, daß, wenn die Volumenkammern 140, 240 ihre Soll-Werte erreicht haben, die mit dem gespeicherten Soll-Wert der Durchflußmengenregistriereinrichtung 42 übereinstimmen müssen, dann ein Abschalten der Abfüllventile 120, 220 mittels der Schaltzylinder 125, 225 erfolgt. Aus diesem Grunde sind die Schaltzylinder 125, 225 mit dem Steuerelement 170 bzw. mit dem Steuerteil des Speichers 160 verbunden.

Die Abfüllvorrichtung arbeitet wie folgt :

Das abzufüllende Medium wird mittels der Förderpumpe 12 durch das Rohrleitungssystem 10 zu den Abfüllventilen 20, 120, 220 gefördert, die eine geöffnete Stellung aufweisen. Aus den Abfüllventilen strömt das Medium in die darunter positionierten Gebinde 30, 130, 230. Auf dem Wege zu jedem Abfüllventil 20, 120, 220 durchströmt das Medium die dem jeweiligen Abfüllventil vorgeschaltete Volumenkammer 40, 140 bzw. 240, deren Laufrad durch das strömende Medium in Umlauf versetzt wird. Die durch die Volumenkammern durchfließenden Mengen werden von den Durchflußmengenregistriereinrichtungen 42, 142, 242 erfaßt und die erhaltenen Werte, worauf nachstehend noch näher eingegangen wird, in den Speicher 160 gegeben. Durch Druckschwankungen und Druckwellen in dem Rohrleitungssystem ist es möglich, daß den Gebinden 30, 130, 230 über die Abfüllventile 20, 120, 220 unterschiedliche Mengen oder Volumina des Mediums zugeführt werden. Um jedoch in allen Gebinden 30, 130, 230 gleiche Mengen bzw. gleiche Volumina des abzufüllenden Mediums zu haben, erfolgt über die Waage 50 bei Erreichen eines vorgegebenen Gewichtes, und zwar mittels des Steuerelementes 60, ein Schließen des Abfüllventiles 20 über den angesteuerten Schaltzylinder 25. Gleichzeitig wird die durch die Volumenkammer 40 hindurchgeströmte Menge an Medium erfaßt und der Durchflußmengenwert in der Durchflußmengenregistriereinrichtung 42 festgehalten und als Soll-Wert in den Speicher 160 gegeben. Die von den Durchflußmengenregistriereinrichtungen 142, 242 erfaßten Werte der durch die Volumenkammern 140, 240 hindurchgeflossenen Mengen an Medium werden als Ist-Werte in den Speicher 160 gegeben. In dem Speicher 160 werden mittels an sich bekannter Einrichtungen die Ist-Werte der Durchflußmengenregistriereinrichtungen 142, 242 mit dem Soll-Wert der Durchflußmengenregistriereinrichtung 42 verglichen und wenn die Ist-Werte der Durchflußmengenregistriereinrichtungen 142, 242 den Soll-Wert der Durchflußmengenregistriereinrichtung 42 erreicht haben, werden die beiden Schaltzylinder 125, 225 der Abfüllventile 120, 220 von dem Schaltelement 170 angesteuert und die Abfüllventile 120, 220 geschlossen. Weiteres Medium kann somit nicht mehr in die Gebinde 130, 230 fließen.

Auf diese Weise ist es möglich, mit einem der Volumenkammer 40 abgenommenen Durchflußmengenwert als Soll-Wert die Durchflußmenge durch die anderen Volumenkammern 140, 240 zu steuern und zu demjenigen Zeitpunkt deren Abfüllventile 120, 220 zu schließen, zu dem durch die Volumenkammern 140, 240 die Menge an Medium durchgeflossen ist, die bereits von der Durchflußmengenregistriereinrichtung 42 erfaßt worden ist.

Sollen beispielsweise alle drei Gebinde 30, 130, 230 mit einer Menge von 50 Kg an Abfüllmedium gefüllt werden, so wird vor Erreichen des Gewichtes von 50 Kg, z. B. von 48 Kg, in dem Gebinde 30 über die Waage 50 durch das Steuerelement 60 das Abfüllventil 20 geschlossen.

Die durch die Durchflußmengenregistriereinrichtung 42 erfaßte Durchflußmenge von 48 Kg wird als Soll-Wert in den Speicher 160 eingegeben, wobei eine sich über den Weg von der Volumenkammer 40 zum Abfüllventil 20 ergebende Mengendifferenz in der Durchflußmengenregistriereinrichtung 42 berücksichtigt wird. Weichen die von den Durchflußmengenregistriereinrichtungen 142, 242 erfaßten Durchflußmengenwerte von dem im Speicher 160 eingespeicherten 48-Kg-Wert als Soll-Wert ab, so bleiben über das Steuerelement 170 gesteuert die beiden Abfüllventile 120, 220 für die Gebinde 130, 230 noch geöffnet, bis die Durchflußmengen in den Volumenkammern 140, 240 den Soll-Wert im Speicher 160 erreicht haben. Liegen die Durchflußmengenwerte der Durchflußmengenregistriereinrichtungen 142, 242 unter dem Soll-Wert im Speicher 160, so fließt über die geöffneten Abfüllventile 120, 220 noch so lange Medium in die Gebinde 130, 230, bis der Soll-Wert erreicht wird. Die Durchflußmengenregistriereinrichtungen 142, 242 erfassen dabei jeweils die neuen entstehenden Ist-Werte und geben diese in den Speicher 160, in dem die sich jeweils verändernden Ist-Werte verglichen werden. Das Steuerelement 170 bewirkt dann das Schließen der Abfüllventile 120, 220, wenn die Ist-Werte der Durchflußmengenregistriereinrichtungen 142, 242 den gespeicherten Soll-Wert der Durchflußmengenregistriereinrichtung 42 erreicht haben.

Vorteilhafterweise ist die Waage 50 so eingestellt, daß ein Schließen des Abfüllventils 20 erfolgt, noch bevor der vorgegebene Gewichts-Soll-Wert der Waage erreicht wird. Dadurch wird vermieden, daß durch die Volumenkammern 140, 240 eine größere Menge an Medium den Abfüllventilen 120, 220 zuströmt und in die Gebinde 130, 230 gelangt, die über dem vorgegebenen Gewichts-Soll-Wert der Waage liegen.

Die Abfüllvorrichtung ist geeignet für das Abfüllen von flüssigen, gasförmigen oder festen Stoffen, wobei letztere Fließeigenschaften aufweisen müssen.

Über die Waage 50 erfolgt über den vom Steuerelement 60 angesteuerten Schaltzylinder 25 das Umschalten von Grobzulauf auf Feinzulauf des abzufüllenden Mediums. Dieses Umschalten vom Grobzulauf auf den Feinzulauf wird durch ein in der Waage vorgegebenes Soll-Gewicht (Beispiel: 48 Kg) erreicht, so daß bei Erreichen dieses Soll-Gewichtes oder Soll-Volumens dann über den Feinzulauf noch so viel Medium zugeführt wird, bis der vorgegebene Soll-Gewichtswert (Beispiel: 50 Kg) von der Waage 50 ermittelt wird und ein Schließen des Abfüllventiles 20 erfolgt. Nunmehr erfaßt die Durchflußmengenregistriereinrichtung 42 den dem Soll-Gewicht entsprechenden Soll-Volumenwert, der in den Speicher 160 eingegeben wird. Liegen die Durchflußmengenwerte der Durchflußmengenregistriereinrichtungen 142, 242 unter dem Soll-Wert im Speicher 160, so fließt über die geöffneten Abfüllventile 120, 220 noch so lange Medium in die Gebinde 130, 230, bis der Soll-Volumenwert und damit der Soll-Gewichtswert von 50 Kg erreicht ist und somit alle Gebinde 30, 130, 230 mit einer Menge von 50 Kg an Abfüllmedium gefüllt sind. Durch eine entsprechende Vorwahl des Umschaltpunktes von Grobzulauf auf Feinzulauf, wobei auch die Schaltzylinder 125, 225 so ausgebildet sind, daß auch über diese ein Grobzulauf und ein Feinzulauf steuerbar ist, ist eine Mehrbefüllung einzelner Gebinde über das Soll-Gewicht oder das Soll-Volumen hinaus vollkommen vermeidbar.

Vorteilhaft ist es, wenn in jedem der zu den Abfüllventilen 20, 120, 220 führenden Zuführungsleitungen 13, 113, 213 eine Förderpumpe 15 angeordnet ist, wobei alle Förderpumpen 15 gleichlaufend sind, so daß bei allen Abfüllventilen die gleiche Anströmgeschwindigkeit gegeben ist, wobei die Förderpumpe oder die Förderpumpen 15 eine Fördergeschwindigkeit haben sollten, die geringfügig über der Fördergeschwindigkeit der Förderpumpe 12 liegt, wenn ein Verbraucher angeschlossen und bedient wird.

**Patentansprüche**

1. Vorrichtung zum gleichzeitigen Abfüllen eines flüssigen oder festen, fließfähigen Mediums in mehrere Gebinde, wie Behälter, Fässer, Packungen od. dgl., bestehend aus einem Rohrleitungssystem (10) mit einer Förderpumpe (12) für die Zuführung des abzufüllenden Mediums und mit über Zuführungsleitungen (13 ; 113 ; 213) verbundenen Abfüllventilen (20 ; 120 ; 220) oberhalb der zu füllenden Gebinde (30 ; 130 ; 230), wobei das Öffnen und Schließen der Abfüllventile (20 ; 120 ; 220) durch eine vom Gewicht des abzufüllenden Mediums abhängige Steuereinrichtung bewirkbar ist, wobei in jeder der zu den Abfüllventilen (20, 120, 220) führenden Zuführungsleitung (13 ; 113 ; 213) eine Volumenkammer (40 ; 140 ; 240) mit einem in deren Innenraum angeordneten, von dem zum jeweiligen Abfüllventil (20 ; 120 ; 220) strömenden Medium in Drehung versetzten Laufrad angeordnet ist, wobei jedes Laufrad auf einer Lagerwelle (41 ; 141 ; 241) angeordnet ist, und aus einem auf das Gewicht des abgefüllten Mediums über eine einem Abfüllventil (20) der Abfüllventile (20, 120, 220) zugeordneten Waage (50) zur Bestimmung des Abfüllgewichtes ansprechenden Steuerelement (60), das mit einem zweistufigen, direkt mit diesem Abfüllventil (20) verbundenen Schaltzylinder (25) verbunden ist, wobei mit den weiteren Abfüllventilen (120, 220) pneumatische, zweistufige Schaltzylinder (125, 225) und mit den Volumenkammern (40, 140, 240) Durchflußmengenregistriereinrichtungen (42, 142, 242) verbunden sind, von denen die Durchflußmengenregistriereinrichtung (42) der Volumenkammer (40) mit dem von der Waage (50) gesteuerten einen Abfüllventil (20) mit einer die beim Abschalten der Zufuhr des Mediums zum einen Abfüllventil (20) durchflossene und von der zugehörigen Durchflußmengenregistriereinrichtung (42) erfaßte Menge an durchflossenem Medium als Soll-Wert speichernden Einrichtung (160) verbunden ist, in der die Durchflußmengenregistriereinrichtungen (142, 242) der anderen Volumenkammern (140, 240) zusammengefügt sind und in der die Soll-Werte der einen Durchflußmengenregistriereinrichtung (42) mit den Ist-Werten der anderen Durchflußmengenregistriereinrichtungen (142, 242) zur Steuerung der anderen Abfüllventile (120, 220) verglichen werden, wobei bei Erreichen der Soll-Werte für die anderen Volumenkammern (140, 240) die diesen zugeordneten Abfüllventile (120, 220) abschaltbar sind, dadurch gekennzeichnet, daß die Hauptzuführungsleitung (11) des Rohrleitungssystems (10) mit einer weiteren, zu einem Verbraucher (115) führenden Abzapfleitung (111) versehen ist, und daß in der zu dem einen Abfüllventil (20) mit zugeordneter Waage (50) führenden Zuführungsleitung (13) vor dem Abfüllventil (20) eine Förderpumpe (15) angeordnet ist.

2. Vorrichtung nach Anspruch 1, dadurch gekennzeichnet, daß in jeder der zu den Abfüllventilen (20, 120, 220) führenden Zuführungsleitungen (13, 113, 213) eine Förderpumpe (15) angeordnet ist, wobei alle Förderpumpen (15) gleichlaufend sind.

**Claims**

1. Device for simultaneously filling a plurality of containers such as receptacles, vats, packages or the like with a liquid or solid fluid substance, consisting of a pipe system (10) with a feed pump (12) for the feeding of the substance to be filled and with filling valves (20 ; 120 ; 220) combined via feeding pipes (13 ; 113 ; 213) above the containers (30 ; 130 ; 230) to be filled, whereby opening and closing of the filling valves (20 ; 120 ; 220) can be actuated by means of a control device dependent on the weight of the substance to be filled, whereby in each of the feeding pipes (13 ; 113 ; 213) leading to the filling valves (20 ; 120 ; 220) a chamber (40 ; 140 ; 240) is arranged with a running wheel arranged in its interior and brought into rotation by the substance which flows to the respective filling valve (20 ; 120 ; 220), whereby each of the running wheels is arranged on a bearing shaft (41 ; 141 ; 241), and a control element (60) which reacts to the weight of the substance filled via a scale (50) which is allocated to the filling valve (20) of the filling valves (20 ; 120 ; 220) and which is linked with a two step switch cylinder (25) directly linked with this filling valve (20), whereby the other filling valves (120, 220) are linked with pneumatic, two-step switch cylinders (125, 225) and the chambers (40, 140, 240) with flow quantity registration devices (42, 142, 242), of which the flow quantity registration device (42) of the chamber (40), which is linked with the one filling valve (20) which is controlled by the scale (50), with a device (160) which memorizes as a set value the quantity of the substance which flowed to the one filling valve (20) and was recorded by the allocated flow quantity registration device (42) when the feed of the substance is switched off, and in which the flow quantity registration devices (142, 242) of the other chambers (140, 240) are centralized and in which the set values of the one flow quantity registration device (42) are compared with the actual values of the other flow quantity registration devices (142, 242) to control the other filling valves (120, 220), whereby, as soon as the set values for the other chambers (140, 240) are achieved the filling valves allocated to them (120, 220) can be switched off, characterized in that the main feeding pipe (11) of the tube system (10) is fitted with a further drawing-off pipe (111) leading to a utilization device (115) and that before the filling valve (20) a feed pump (15) is arranged in the feeding pipe (13) leading to the one filling valve (20) with the allocated scale (50).

2. Device according to claim 1, characterized in that a feeding pump (15) is arranged in each of the feeding pipes (13, 113, 213) leading to the filling valves (20, 120, 220), whereby all feed pumps (15) run simultaneously.

## Revendications

1. Dispositif pour le remplissage simultané d'une matière liquide ou solide dans une pluralité de conteneurs, tels que des récipients, fûts, emballages ou similaires, composé d'un système de tuyauteries (10) avec une pompe d'alimentation (12) pour l'alimentation de la matière à remplir et avec des vannes de remplissage (20, 120, 220) reliées par des conduites d'alimentation (13, 113, 213) et situées au-dessus des emballages à remplir (30, 130, 230), l'ouverture et la fermeture des vannes de remplissage (20, 120, 220) pouvant être réalisée par un dispositif de commande dépendant du poids de la matière à remplir, une chambre de volume (40, 140, 240) avec une roue mobile placée à l'intérieur de celle-ci, dont la rotation est provoquée par la matière qui s'écoule vers la vanne de remplissage respective (20, 120, 220) étant placée dans chacune des conduites d'alimentation (13, 113, 213) menant aux vannes de remplissage (20, 120, 220), chaque roue mobile étant placée sur un arbre de palier (41, 141, 241), et d'un élément de commande (60) réagissant au poids de la matière remplie par l'intermédiaire d'une balance (50) qui détermine le poids de remplissage et qui correspond à l'une (20) des vannes de remplissage (20, 120, 220), élément de commande qui est relié à un cylindre de commande (25) biétagé directement relié à cette même vanne de remplissage (20), des cylindres de commande pneumatiques biétagés (125, 225) étant reliés aux autres vannes de commande (120, 220) et des dispositifs enregistreurs de débit (42, 142, 242) étant reliés aux chambres de volume (40, 140, 240), parmi lesquels le dispositif enregistreur de débit (42) de la chambre de volume (40) avec la vanne de remplissage (20) commandée par la balance (50) étant relié à un dispositif (160) mémorisant la quantité de matière coulée qui s'est écoulée vers une vanne de remplissage (20) lors de l'arrêt de l'alimentation en matière et qui est détectée par le dispositif enregistreur de débit correspondant (42) comme valeur de consigne, dispositif (160) dans lequel les dispositifs enregistreurs de débit (142, 242) des autres chambres de volume (140, 240) sont réunis et dans lequel les valeurs de consigne de l'un des dispositifs enregistreurs de débit (42) sont comparées avec les valeurs effectives des autres dispositifs enregistreurs de débit (142, 242) pour la commande des autres vannes de remplissage (120, 220), les vannes de remplissage (120, 220) correspondant aux autres chambres de volume (140, 240) pouvant être mises hors circuit, lorsque les valeurs de consigne sont atteintes pour les autres chambres de volume, caractérisé en ce que la conduite principale d'alimentation (11) du système de tuyauteries (10) est équipée d'une autre conduite de soutirage (111) menant à un consommateur (115) et qu'une pompe d'alimentation (15) est placée dans la conduite d'alimentation (13) qui mène à la vanne de remplissage (20) avec la balance correspondante (50) devant la vanne de remplissage.

2. Dispositif selon la revendication 1, caractérisé en ce qu'une pompe d'alimentation (15) est placée dans chacune des conduites d'alimentation (13, 113, 213) menant aux vannes de remplissage (20, 120, 220), toutes les pompes d'alimentation étant synchrones.

160

170

60

142

140

125

120

113

130

45

141

42

40

25

30

13

20

50

10

13

45

41

242

240

225

213

230

11

213

45

213

12

241

220

70

115

111

1